# EUROPEAN PATENT APPLICATION

(11) **EP 0 729 859 A2**
(43) Date of publication of application: **04.09.1996**
(21) Application number: 96102876.8
(22) Date of filing: 27.02.1996
(51) Int. Cl.: B60K 31/00

(54) **System and method for integrating intelligent cruise control with an electronically controlled engine**

(30) Priority: 01.03.1995 US 396628
(71) Applicant: Eaton VORAD Technologies, L.L.C., San Diego, California 92127 (US)
(72) Inventor: Chakraborty, Shubhayu, Wixom, Michigan 48393 (US); Mack, William Joseph, Clemmons, North Carolina 27012 (US); Smedley, Daniel George, Farmington Hills, Michigan 48335 (US); Fortune, G. Clark, Farmington Hills, Michigan 48331 (US)
(74) Representative: Patentanwälte Rüger, Barthelt & Abel

(57) **Abstract**

A system and method for integrating intelligent cruise control functions (72) with traditional cruise control functions (70) in an electronically controlled internal-combustion engine (E) utilizes engine control modes as defined in the SAE J1922 and SAE J1939 specifications. In one embodiment, the speed control mode is utilized to broadcast a desired engine speed to automatically attain and maintain a desired following distance relative to a forward vehicle. In another embodiment, the engine speed/torque limit control mode is used to impose an upper limit on the traditional cruise control set speed to control the headway distance relative to a forward vehicle. The system and method relinquish control to traditional cruise control when no forward vehicle is detected. Another embodiment provides a control strategy similar to that defined by the J1922 and J1939 specifications to select the lower value as determined by the intelligent cruise control (72) and traditional cruise control (70) functions.

## Description

### Technical Field

The present invention relates to a system and method for integrating an intelligent cruise control module with an electronically controlled engine in a vehicle utilizing standard engine control modes.

### Background Art

As microprocessors continue to evolve their use in a wide variety of control applications becomes more pervasive. Various industries, such as the automotive and heavy-duty truck industries, have attempted to standardize a myriad of system components and their associated methods of operation to promote high-quality, reliable, and dependable vehicle systems and subsystems while facilitating system integration. Unfortunately, efforts of various standardization committees often lag the rapid pace of technology development. Thus, many systems designed according to yesterday's standards, guidelines, or recommendations are not amenable to integration or adaptation with today's innovations. Therefore, it is desirable for newly developed technology to be capable of being retrofitted to existing vehicle systems and subsystems without significantly affecting the price, performance, or ease of installation and operation of the new technology.

Similarly, as standards, recommendations, and guidelines (hereinafter collectively referred to as standards) are developed, they typically undergo significant revisions and modifications. A system designed to conform with any particular draft may not be entirely compatible with subsequent revisions, additions or modifications. Furthermore, different organizations may have different opinions regarding a more desirable system, protocol, or method of operation which results in promulgation of incompatible standards. Thus, it is often desirable to design configurable systems which conform to various standards which may be published by different committees or as draft proposals during development.

Electronically controlled internal-combustion engines are well established in the art and have been used in various types of vehicles, including heavy-duty tractor semi-trailer vehicles, for a number of years. As such, standards, recommendations, guidelines, specifications, and the like are continually developed and published by various standards organizations designating components, testing procedures, and methods of operation. Such standards organizations include the International Standards Organization (ISO), the Society of Automotive Engineers (SAE), and the Institute for Electrical and Electronics Engineers (IEEE), among numerous others. Often standards published by one organization will have corresponding designations in other organizations or may be a conglomeration of various other standards. Standards of particular interest in providing electronic engine control for vehicles such as heavy-duty tractor semi-trailer vehicles are published by the SAE and designated SAE J1922 and SAE J1939. The J1922 standard will eventually be supplanted by the J1939 standard which has not yet been finalized as of the filing of the present application. As such, the J1922 and J1939 standards include a number of similarities in prescribing control system design and operation for compression-ignition internal-combustion engines, such as diesel engines. As is known, ISO 11898 is generally similar to and compatible with SAE J1939.

The J1922 and J1939 standards define various modes of operation including a normal mode, a speed control mode, a torque control mode, a speed and torque limiting control mode, and an override mode. In normal mode, engine fueling is controlled based primarily on input received from the vehicle operator, typically via an accelerator pedal. Of course a number of other factors influence the actual determination of engine fueling as described in greater detail below. In speed control mode, engine fueling is controlled to maintain a substantially constant engine speed. In torque control mode, a substantially constant engine output torque (almost always calculated or estimated) is effected regardless of engine speed and vehicle speed. Speed and torque limiting control mode imposes an upper limit on engine speed and engine output torque. The override mode may be used to override the current operating mode and command the engine to a particular engine speed or engine output torque. The control mode is based on current operating conditions and commands received by the engine controller which may be generated by various other vehicle systems and subsystems or by the vehicle operator. A more detailed description of the modes of operation may be found in the J1922 and J1939 specifications published by the SAE, the disclosures of which are hereby incorporated by reference in their entirety. Other, related standards utilized in electronic engine control and communication include SAE J1587, SAE J1708, and SAE J1843, the disclosures of which are also hereby incorporated by reference in their entirety.

Traditional cruise control functions are utilized to automatically maintain a desired road speed or a desired engine speed without the need for operator intervention. Typically, an on/off switch is provided for the cruise control in addition to a switch which sets the desired vehicle speed or engine speed to the current operating speed when the switch is actuated. Some systems provide an additional switch for incremental speed adjustments and automatically returning to a previously set speed.

Recent advancements in cruise control technology have resulted in systems which are capable of measuring and maintaining a relatively constant following distance or headway distance from a forward vehicle. Headway distance is determined based on the current vehicle speed and closure rate and is often designated in seconds while following distance is independent of speed and closure rate and is designated in feet. These so-called intelligent cruise control functions typically utilize an electromagnetic beam, such as a laser beam, a microwave radar beam, or a video image, to determine the distance and closure rate between the host vehicle and a forward vehicle or other object. This information may be used to "track" or follow the forward vehicle at a desired following distance selected by the operator. Distance and closure rate information may also be used to warn the vehicle operator of a potentially hazardous situation such as following the forward vehicle too closely for the current vehicle speed or approaching the forward vehicle or another object too rapidly such that a collision may occur.

Many prior art intelligent cruise control systems are designed for custom applications which require complete system integration when the vehicle is designed, manufactured, and assembled. In these systems, the intelligent cruise control module may control vehicle acceleration/deceleration through a customized engine control module which may implement an intelligent cruise control algorithm to modify engine fueling or effect vehicle braking. These systems, however, fail to provide a system which may be installed without significant changes to currently available engine control modules. Furthermore, these systems are incapable of being retrofitted to existing vehicles without significant system modification and expense, particularly in medium and heavy-duty truck applications employing diesel engines. Thus, it is desirable to have a system and method for integrating an intelligent cruise control function with existing cruise control operation without substantial system modification.

### Disclosure of the Invention

Thus, it is an object of the present invention to provide a system and method for integrating an intelligent cruise control function in an electronically controlled internal combustion engine with a traditional cruise control function without substantial system modification.

It is a further object of the present invention to provide a system and method for integrating an intelligent cruise control function with traditional cruise control functions utilizing standard control modes for internal-combustion engines.

A further object of the present invention is to provide a system and method for implementing an intelligent cruise control function in a vehicle having an electronically controlled internal-combustion engine utilizing standard control modes in accordance with the SAE J1922 and SAE J1939 specifications.

Another object of the present invention is to provide a system and method for implementing an intelligent cruise control function in a vehicle having an electronically controlled engine with a standard control/communication interface.

A still further object of the present invention is to provide a system and method for integrating an intelligent cruise control function with traditional cruise control functions utilizing the speed control mode as described in the SAE J1922 and SAE J1939 specifications.

An additional object of the present invention is to provide a system and method for integrating an intelligent cruise control function with traditional cruise control functions utilizing the speed and torque limiting control mode as described in the SAE J1922 and SAE J1939 specifications.

Another object of the present invention is to provide a system and method for implementing an intelligent cruise control function which complements traditional cruise control functions by effecting traditional cruise control functions when no forward vehicle is detected.

Still another object of the present invention is to provide a system and method for implementing an intelligent cruise control function in a vehicle having an electronically controlled engine with an engine retarder and a communications and/or control interface wherein the system and method include controlling the engine retarder via the interface responsive to the intelligent cruise control function.

An additional object of the present invention is to provide a system and method for implementing an intelligent cruise control function in a vehicle having an electronically controlled engine, an electronically controlled transmission, and a communications/control interface, the system and method including controlling the transmission via the interface responsive to the intelligent cruise control function.

A still further object of the present invention is to provide a system and method for implementing intelligent cruise control functions in addition to traditional cruise control functions in a vehicle with an electronically controlled internal-combustion engine by utilizing the lesser value for the vehicle speed as determined by the intelligent cruise control functions and the traditional cruise control functions.

Another object of the present invention is to utilize information available via SAE J1587 in implementing an intelligent cruise control function in a vehicle having an electronically controlled engine with a standard control/communication interface such that additional vehicle sensors are unnecessary.

In carrying out the above objects and other objects and features of the present invention, a system is provided for a vehicle including an engine having an electronic engine control module with a communications interface for exchanging status and/or control information, the system including a sensor for determining an object distance and closure rate (or time rate of change of the object distance) of the vehicle relative to a forward object, control logic in communication with the sensor for determining a vehicle parameter value based on the object distance, the closure rate, and/or a desired distance parameter value and communicating the vehicle parameter value to the engine control module via the communications interface to maintain a small error between the desired distance parameter value and the distance. In one embodiment, the vehicle parameter value represents a desired engine speed value while in another embodiment, the vehicle parameter value represents a desired engine speed limit value.

In one embodiment, the system includes an engine retarder in communication with the engine controller and the control logic is further operative to command activation of the engine retarder via the communications interface of the engine controller based on the object distance, the desired distance parameter value and/or the closure rate.

A method is also provided for implementing intelligent cruise control functions in a vehicle having an electronically controlled internal-combustion engine. The method includes sensing a parameter indicative of distance between the vehicle and a forward object so as to define an inter-vehicle distance, determining a closure rate based on the parameter, determining a vehicle parameter value based on a desired distance parameter value, the inter-vehicle distance, and/or the closure rate, and communicating the vehicle parameter value to the engine control module via a communications interface to maintain a small error between the desired distance parameter value and the inter-vehicle distance. In one embodiment, the method also includes determining a desired road speed and controlling the engine to achieve the desired road speed until the sensor detects a forward object.

The method of the present invention also includes controlling the engine utilizing standard engine control modes, such as those described in the SAE J1922 and SAE J1939 protocols. The method may also include controlling operation of an engine retarder via a standard communications interface based on the inter-vehicle distance and the closure rate.

The advantages accruing to the present invention are numerous. The system and method of the present invention automatically adjust the vehicle speed to reduce driver intervention in attaining a desired headway or following distance between the host vehicle and a forward vehicle and maintaining that headway or following distance. For example, it is desirable to automatically reduce the cruising speed without driver intervention when a vehicle approaches a forward vehicle. Once the forward vehicle increases its speed or is no longer detected, the system and method of the present invention allow acceleration to the previously set cruising speed. Furthermore, the system and method of the present invention utilize standard engine control modes and are therefore easily implemented on a variety of different engines conforming to those standards.

Unlike some prior art intelligent cruise control systems, the system and method of the present invention allow the vehicle operator to select a desirable headway distance rather than using a fixed headway distance.

The above objects and other objects, features, and advantages of the present invention will be readily appreciated by one of ordinary skill in this art from the following detailed description of the best mode for carrying out the invention when taken in connection with the accompanying drawings.

### Brief Description Of The Drawings

FIGURE 1 is a block diagram illustrating a system and method for integrating intelligent cruise control functions with traditional cruise control functions in a vehicle having an electronically controlled internal-combustion engine according to the present invention;
FIGURE 2 is a block diagram illustrating a modification to the SAE J1939 electronic engine control strategy to integrate intelligent cruise control functions with traditional cruise control functions according to the present invention;
FIGURE 3 is a graph illustrating operation of the control system and method depicted in Figure 2;
FIGURE 4 is a graph illustrating operation of a system and method for integrating intelligent cruise control functions with traditional cruise control functions utilizing the speed control mode of the SAE J1922/J1939 protocol according to the present invention;
FIGURE 5 is a graph illustrating operation of a system and method for integrating intelligent cruise control functions with traditional cruise control functions utilizing the speed and torque limiting control mode of the SAE J1922/J1939 protocol according to the present invention;
FIGURES 6 and 7 are flowcharts illustrating logical control functions of two embodiments of a system and method for integrating intelligent cruise control functions with traditional cruised control functions according to the present invention; and
FIGURE 8 is a block diagram of an alternative embodiment having intelligent cruise control logic within a collision warning system according to the present invention.

### Best Mode For Carrying Out The Invention

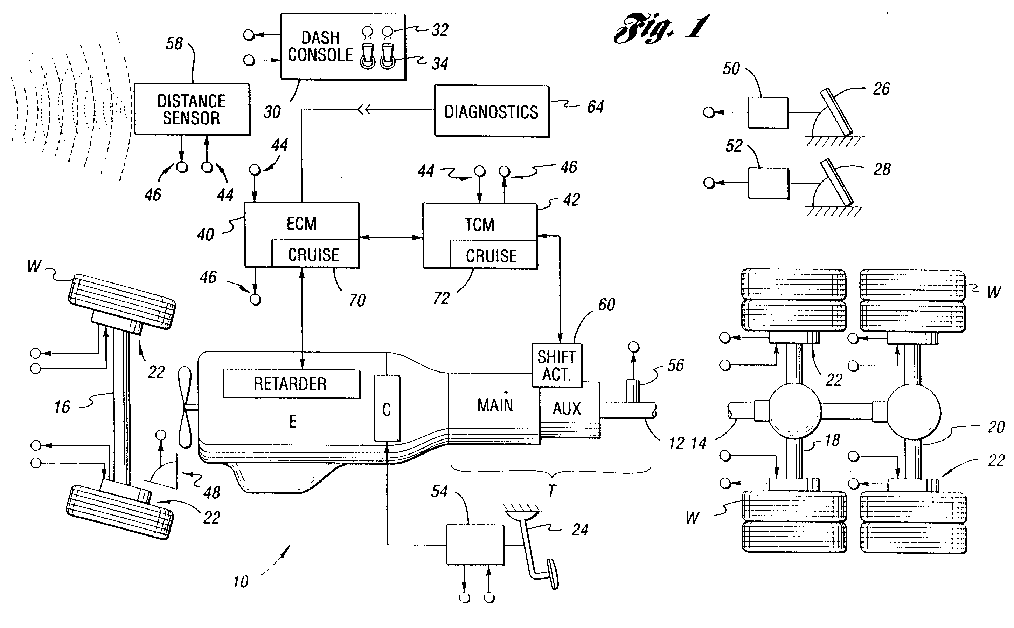

Referring now to Figure 1, a graphical representation of a system and method for integrating intelligent cruise control functions with traditional cruise control functions according to the present invention is shown. Figure 1 depicts a vehicle 10, such as a tractor of a tractor semi-trailer vehicle, having an electronically controlled engine E coupled to a compound transmission T via a clutch mechanism C. Although a vehicle such as depicted in Figure 1 represents one of the possible applications for the system and method of the present invention, it should be appreciated that the present invention transcends any particular type of vehicle employing an electronically controlled engine having traditional cruise control functions and intelligent cruise control functions which utilize distance information and/or closure rate information as described herein.

In a preferred embodiment, transmission T is a compound change gear or change speed transmission having a main section connected in series with an auxiliary section which includes an output shaft 12 coupled to a vehicle drive shaft 14. Vehicle 10 includes at least two axles such as a steer axle 16 and at least one drive axle, such as axles 18 and 20. Each axle supports corresponding wheels W having foundation or service brake components 22 which may be manually or automatically actuated depending upon the particular application and operating conditions. For example, a vehicle equipped with ABS may assume automatic control of braking under appropriate conditions such as when the vehicle is braking and the system detects a sufficient slip differential among one or more wheels. Since an ABS system will have higher priority than a cruise control system as defined in the J1922 and J1939 standards, the present invention can operate without regard to ABS status. Service brake components 22 may also include wheel speed sensors and electronically controlled pressure valves to effect control of the vehicle braking system as described herein.

Vehicle 10 may include conventional operator controls such as clutch pedal 24 (in some manual systems), accelerator pedal 26, brake pedal 28, and a dashboard control console 30 which may include any of a number of output devices, such as lights 32, and various input devices, such as switches 34. The vehicle control system includes an electronic control module such as engine control module (ECM) 40 and preferably includes an additional electronic control module for effecting control of transmission T, such as transmission control module (TCM) 42. Of course, engine and transmission control may be implemented by a single electronic control module in some applications. The ECM 40 and TCM 42 communicate with a variety of sensors via inputs 44 and with numerous actuators via outputs 46. Sensors may include a steering angle sensor 48, wheel speed sensors (included in braking components 22), an electronic accelerator pedal sensor (APS) 50, a brake pedal sensor or switch 52, a clutch control/sensor 54, an output speed sensor 56, and a sensor 58 for providing a parameter indicative of inter-vehicle distance or closing rate, among numerous others. Preferably, sensor 58 provides distance and closure rate information relative to vehicle 10 and at least one forward object. In a preferred embodiment, distance sensor 58 is part of an Eaton VORAD EVT-200 collision warning system commercially available from the assignee of the present invention.

Actuators may include a shift actuator 60 for automatically shifting gears within transmission T, electronically controlled pressure valves (included in braking components 22), and an engine compression retarder 62 or the like (such as a driveline retarder), all well established in the art. A diagnostics module 64 may be selectively connected to ECM 40 and preferably communicates status messages as defined by the SAE J1587 protocol to facilitate diagnostics, service, and maintenance of vehicle 10. These messages include information such as current engine speed and torque, accelerator position, road speed, cruise control status, and cruise control set speed, among many others.

ECM 40 communicates with TCM 42 according essentially to the SAE J1922 or SAE J1939 protocols. Preferably, the communication link between ECM 40 and TCM 42 conforms to the SAE J1708 physical layer standard or the CAN (controller area network) standard. Also preferably, sensor 58 communicates with ECM 40 and/or TCM 42 via a communication link substantially complying with SAE J1708 or CAN and communication protocol substantially similar to SAE J1922 or SAE J1939. It will be appreciated by one of ordinary skill in the art that the various connections between electronic controllers, sensors, and actuators may be changed to accommodate the particular requirements of a specific application without departing from the spirit or scope of the present invention. Similarly, various communication links and protocols may be accommodated with appropriate translators or converters. For example, in one embodiment of the present invention, distance sensor 58 communicates directly with ECM 40 utilizing J1708 and J1939. In another embodiment of the present invention, distance sensor 58 communicates serially via an RS232 link which is converted first to J1708 and then to CAN protocol to communicate with TCM 42 which then communicates with ECM 40 via a CAN/J1708 converter and J1922 messaging protocol. Thus, the present invention relies on the exchange of control and status information which is independent of the particular data path and in some cases the messaging protocol utilized in the information exchange.

The ECM 40 and TCM 42 contain logic rules which may be implemented in a variety of combinations of hardware circuitry components and programmed microprocessors to effect control of the various vehicle systems and subsystems. Often, control functions are logically separated and have specific input parameters, control equations, and output parameters which may be unique or shared with other logical control functions and/or other system and subsystem controllers. Traditional cruise control functions are represented schematically by cruise control block 70 within ECM 40 which represents the particular logic rules utilized to effect these functions as described herein. Similarly, TCM 42 includes cruise control block 72 which represents the logic rules necessary to implement traditional cruise control functions and may include intelligent cruise control functions when utilized with sensor 58 as described in greater detail herein.

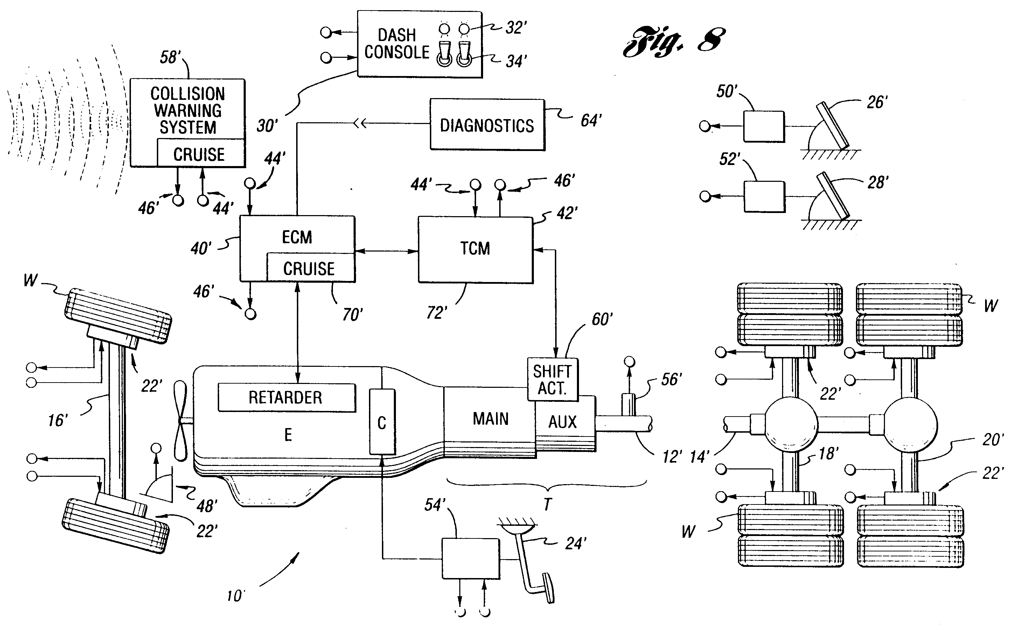

In one embodiment of the present invention, cruise control blocks 70 and 72 implement traditional cruise control functions for engine E and transmission T, respectively, while distance sensor 58 includes logic rules to effect intelligent cruise control functions (best illustrated in Figure 8) for engine E and/or transmission T. In this embodiment, distance sensor 58 preferably communicates directly with ECM 40 using SAE J1922/J1939. In another embodiment of the present invention, distance sensor 58 provides distance and closure rate information to TCM 42 and cruise control block 72 effects intelligent cruise control functions while cruise control block 70 with in ECM 40 effects traditional cruise control functions. In this embodiment, sensor 58 is preferably connected to TCM 42 and need not utilize any particular communications protocol.

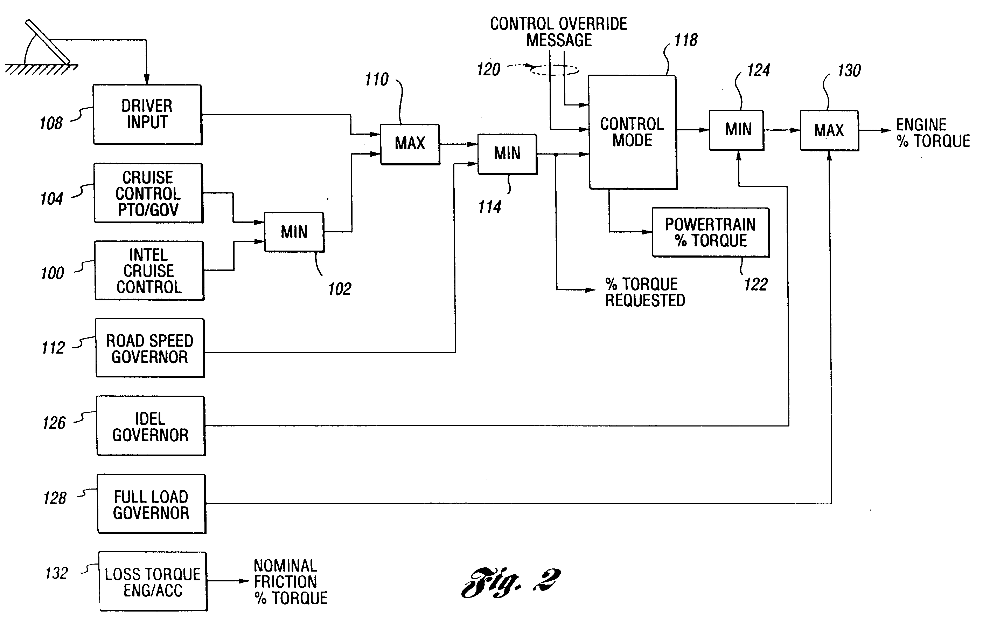

Referring now to Figure 2, a control system block diagram is shown illustrating a system and method for integrating intelligent cruise control functions with traditional cruise control functions according to the present invention. The embodiment illustrated in Figure 2 requires modification of the SAE J1939 standard to accommodate intelligent cruise control functions. Figure 2 illustrates torque commands and calculations when a "maximum selection for low idle" technique is used as defined in the SAE J1939 specification (as modified by the present invention). This particular technique is only one of a number of techniques defined by the SAE J1939 specification and was chosen as a representative illustration only. As such, one of ordinary skill in the art will recognize that the modifications illustrated and described in detail below apply equally as well to the various other calculation techniques, such as "summation with low idle", and the like. It will also be recognized that similar modifications could be applied to the control strategy of a system utilizing the SAE J1922 standard.

As illustrated in Figure 2, the present invention accommodates intelligent cruise control functions via blocks 100 and 102. The present invention utilizes the lower value of the vehicle road speed as determined by the traditional cruise control and PTO (power take-off) block 104 and intelligent cruise control block 100. The actual determination of the values for the desired road speed as calculated by both the traditional cruise control and intelligent cruise control forms no part of the present invention. However, desired road speed determined by traditional cruise control is based on a cruise set speed while desired road speed based on intelligent cruise may be determined utilizing distance and closure rate relative to a forward vehicle, among other factors. Possible systems and methods for implementing intelligent cruise control functions are disclosed in U.S. patent application serial number 08/396,640 filed March 1, 1995 entitled "System and Method for Intelligent Cruise Control Using Standard Engine Control Modes" assigned to the assignee of the present invention, the disclosure of which is hereby incorporated by reference in its entirety.

The remaining control blocks illustrated in Figure 2 function as defined by the SAE J1939 standard and are briefly summarized herein for convenience only. The vehicle operator requests a particular engine fueling level or vehicle road speed via an accelerator pedal 106 and driver input block 108. The driver demand is compared to the lower of the intelligent cruise control road speed and the traditional cruise control road speed by block 110 which selects the larger value of its inputs. This allows the driver to effectively override the road speed calculated by either of the cruise control functions and accelerate when either cruise control function is set. The output of block 110 is compared to an upper limit determined by the road speed governor 112 at block 114 which selects the lower of the two inputs. The output of block 114 represents requested torque as a percentage of total available torque and is an input to block 118.

With continuing reference to Figure 2, the various control modes defined by SAE J1922/J1939 are implemented by block 118 which may receive control messages and control mode override messages from various other system controllers via a standard communication link 120. Depending upon the current control mode (i.e. normal, speed control, torque control, or speed/torque limit control), block 118 produces a desired engine torque as a percentage of the total available engine torque. This may also be converted to a desired engine speed as indicated by block 122. Block 124 then selects the higher value of the output from block 118 and a lower limit value imposed by idle governor 126. The lower value of the output from block 124 and the value generated by the full load governor 128 is selected by block 130 to determine the engine output torque. Losses due to friction and engine accessory load are compensated for by block 132 so that the actual engine output torque delivered to the vehicle transmission more closely approximates the calculated desired output torque.

Referring now to Figure 3, a graph of engine speed as a function of time illustrates operation of one embodiment of the present invention implementing the control strategy depicted in Figure 2. Typically, when cruise control (traditional or intelligent) is active, the vehicle speed tracks the engine speed since the transmission remains in a single gear or in a gear group having similar gear ratios. Thus, the manner of operation of the present invention as illustrated in Figure 3 would also apply to the control of other vehicle parameters used for cruise control functions, such as engine torque or actual vehicle road speed. Line 150 of Figure 3 represents a desired engine speed as determined by an intelligent cruise control module. Line 152 represents desired engine speed as determined by a traditional cruise control function, i.e. a constant value until the cruise control is turned off at time t₆. Line 154 represents the actual engine speed.

At time t₀, the vehicle is approaching a forward vehicle with the traditional cruise and intelligent cruise functions activated. The actual engine speed tracks the lower of the two values as explained above with reference to Figure 2. From time t₀ to time t₂, the engine speed determined by the intelligent cruise control is decreased as the vehicle approaches a forward vehicle. At time t₁, the engine speed determined by the intelligent cruise control decreases to a value below the engine speed determined by the traditional cruise control so the actual engine speed tracks the engine speed determined by the intelligent cruise control. From time t₂ to time t₃, the intelligent cruise control maintains a constant engine speed to track a forward vehicle which begins to pull away from the instant vehicle from time t₃ to time t₅. At time t₄, the engine speed value determined by the intelligent cruise control exceeds that determined by the traditional cruise control so the actual engine speed tracks that of the traditional cruise control. At time t₅, the intelligent cruise controls reaches a predetermined maximum value which may indicate that no forward object is within range. At time t₆, the traditional cruise control is deactivated or turned off and the engine speed falls until time t₇ where the operator resumes control of the engine speed via the accelerator pedal.

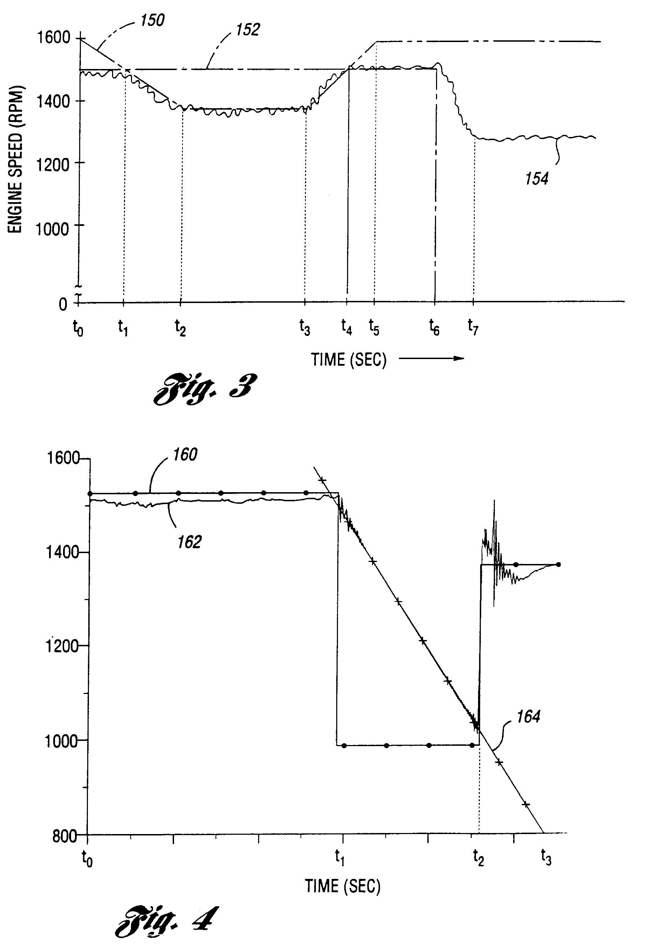

Referring now to Figure 4, a graph is shown illustrating operation of another embodiment of the present invention. The embodiment characterized in Figure 4 corresponds to a control strategy in accordance with the SAE J1939 or J1922 specifications. Therefore, the modifications illustrated in Figure 2 are not necessary, i.e. blocks 100 and 102 are eliminated and the output of block 104 along with the output of block 108 provide the input to block 110. Thus, Figure 4 illustrates use of the speed control mode as defined by the J1922 and J1939 specifications to integrate intelligent cruise control functions with traditional cruise control functions.

In a preferred embodiment operating as depicted in Figure 4, an EVT-200 Collision Warning System is used to provide the intelligent cruise functions for a tractor semi-trailer vehicle without a trailer attached (i.e. running "bobtail"). The EVT-200 utilizes microwave radar to determine if a vehicle or other object is within the path of the host vehicle. If an object or vehicle is detected, the EVT-200 ascertains the distance and closure rate relative to the host vehicle. The EVT-200, or another similar intelligent cruise control module, may utilize this information to determine an appropriate engine speed to attain and keep a desired following distance from the forward vehicle. This is accomplished by broadcasting an appropriate message via a standard communication link to the electronic engine control module to put the engine in the engine speed control mode defined by the SAE J1922 specification. The desired engine speed is also repeatedly broadcast at predetermined intervals while a forward vehicle is detected. Thus, the road speed of the host vehicle may be reduced to match that of the forward target vehicle without driver intervention. When the forward target vehicle moves out of range, the system broadcasts a message to the ECM to return to normal mode engine control and the traditional cruise control function provided by the ECM may assume control.

The graph of Figure 4, similar to that of Figure 3, shows engine speed as a function of time to illustrate operation of one embodiment of the present invention. Beginning at time t₀, the intelligent cruise control module has broadcast an appropriate message to put the engine into engine speed control mode. The desired engine speed as determined by the intelligent cruise control logic is represented by line 160. The actual engine speed is represented by line 162. As illustrated, the ECM adjusts the fueling appropriately to maintain the actual engine speed slightly below the desired engine speed. Thus, from time t₀ to time t₁, the intelligent cruise control logic periodically broadcasts the same desired engine speed and the ECM performs the actual control function (typically proportional-integral -differential or PID control) to maintain that engine speed.

At time t₁ of Figure 4, the desired engine speed determined by the intelligent cruise control is decreased. This may result from a forward target vehicle suddenly moving into the same lane as the host vehicle. The actual engine speed under no-load conditions decays approximately linearly at a rate of about 30 rpm/s in a preferred embodiment as represented by line 164. If the engine is equipped with a compression retarder such as the well known Jacobs engine brake, or a similar device, a higher rate of deceleration may be achieved by automatically actuating the engine retarder. Typically, such an engine retarder can be controlled to affect one, two, or three cylinder banks (each having two cylinders) to provide a variable amount of retarding force.

At time t₂, the desired engine speed determined by the intelligent cruise logic is increased. As illustrated, the actual engine speed responds more quickly to increases in commanded engine speed. At time t₃, however, the actual engine speed is again approximately equal to the desired engine speed as determined by the intelligent cruise control logic and broadcast using SAE J1922 or J1939. Of course the actual response time and characteristics may vary depending upon a number of factors including the particular engine and engine calibrations, the transmission, the vehicle weight, and the current operating conditions.

Since the engine speed control mode of SAE J1922 and J1939 overrides the current operating control mode, the intelligent cruise control and the traditional cruise control should not be engaged at the same time in this embodiment. Unlike the control strategy illustrated in Figure 2, the intelligent cruise control and the traditional cruise control functions would compete for control of the engine which may result in erratic behavior. Thus, the operator controls on the dashboard console should be arranged to provide exclusive operation of either traditional cruise control functions or intelligent cruise control functions. In this case, the intelligent cruise control simulates traditional cruise control functions by maintaining a predetermined vehicle (or engine) set speed when no forward target vehicle is detected by periodically broadcasting this target value rather than actually relinquishing engine control to the traditional cruise functions performed by the ECM.

Referring now to Figure 5, a graph of engine speed as a function of time is shown to illustrate operation of another embodiment of the present invention for integrating intelligent cruise control functions with traditional cruise control functions in an electronically controlled engine. Like the embodiment characterized in Figure 4, the embodiment characterized in Figure 5 does not require any modification to a control strategy which substantially complies with SAE J1922 or SAE J1939. The embodiment of the present invention illustrated in Figure 5 utilizes the speed/torque limit control mode of the SAE J1922 or J1939 specification to integrate the intelligent cruise control functions and the traditional cruise control functions.

In this embodiment, the driver initiates cruise control by manipulating the various cruise switches on the dashboard console. The conventional cruise control functions are regulated by the ECM. Once the traditional cruise control is active, the intelligent cruise control may reduce the vehicle speed using the J1939 or J1922 engine speed/torque limit control mode. During operation, the intelligent cruise control broadcasts an engine speed upper limit and percent torque value limit over a standard communications interface to the ECM. The ECM receives this data and controls engine fueling to limit the engine speed to the value received. The intelligent cruise control can use a variety of information broadcast from the ECM as defined by the SAE J1587 specification which includes engine speed, road speed, traditional cruise control status, and traditional cruise control set speed.

This embodiment allows simultaneous operation of the traditional cruise control and the intelligent cruise control since the latter only imposes an upper limit on the desired engine speed determined by the former. This has the advantage of allowing the vehicle to maintain its characteristic driveability or feel as determined by the engine manufacturer in effecting the cruise control functions. For example, to facilitate product differentiation, one engine manufacturer may impose tighter control on the controlled variable (engine speed or vehicle speed) while in cruise control than another manufacturer. However, in speed control mode, it is difficult to distinguish between various manufacturers since many impose more stringent control as defined by the J1922 and J1939 standards. Since this embodiment of the present invention utilizes the engine speed/torque limit control mode, the underlying characteristics of the parameter control effected by the ECM remain unchanged and may therefore be indicative of a particular ECM/engine manufacturer.

Utilizing the engine speed/torque limit control mode defined by the J1922 and J1939 standards also imposes less demanding communication requirements on the intelligent cruise control function. Unlike the speed control mode which requires periodically broadcasting the desired engine speed, the engine speed/torque limit control mode remains in effect until changed or canceled by a subsequent broadcast. Thus, it is not necessary for the intelligent cruise control to continually monitor the status of the traditional cruise control since the intelligent cruise control is not responsible for actually implementing the control function.

The graph of Figure 5 illustrates a desired engine speed as determined by the traditional cruise control 170, an actual engine speed 172, and a desired engine speed as determined by an intelligent cruise control 174 which is imposed via the engine speed/torque limit control mode of J1922 or J1939. From time t₀ to time t₁, the actual engine speed follows the engine speed determined by the traditional cruise control function and the intelligent cruise control is not broadcasting a speed limit control message. From time t₁ to time t₃, the intelligent cruise control function broadcasts an appropriate message via the standard communications interface to the ECM to request the engine speed/torque limit control mode. A requested engine speed is also broadcast which overrides the engine speed determined by the traditional cruise control.

With continuing reference to Figure 5, the actual engine speed decreases from time t₁ to time t₂ where it is limited by the intelligent cruise control functions. At time t₃, the intelligent cruise control returns the ECM to normal control mode and the traditional cruise control regains control of the engine speed which reaches a steady state value at time t₄. At time t₅, the intelligent cruise broadcasts a limit which exceeds the current set point for the traditional cruise control. Since this is an upper limit, the engine speed continues to follow the desired engine speed determined by the traditional cruise control. At time t₆, the traditional cruise control is deactivated and the engine speed decreases until time t₇ where the operator resumes control via the vehicle accelerator pedal. From time t₈ to time t₉, the intelligent cruise control continues to lower the set speed due to a decreasing distance between the host vehicle and a forward vehicle, for example. However, since the traditional cruise control is deactivated, the desired engine speed determined by the intelligent cruise control does not impose an upper limit on the engine speed requested by the driver.

As with the embodiment characterized in Figure 4, the embodiment characterized in Figure 5 may be utilized in cooperation with a compression release engine retarder or similar engine braking device. Use of an engine braking device increases the rate of engine deceleration when applied and provides the control system with greater authority to further reduce unnecessary driver intervention.

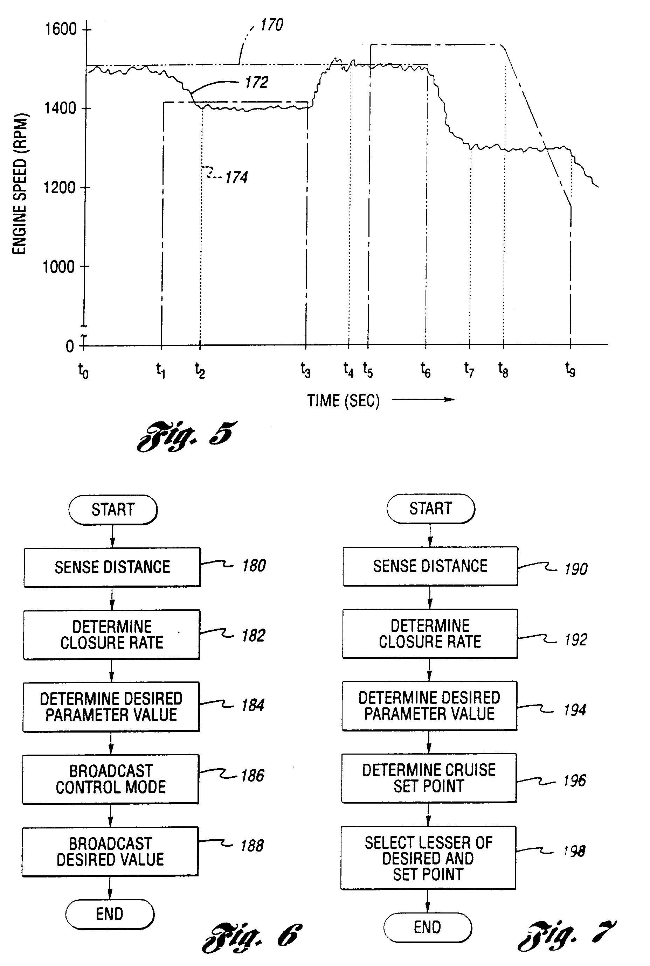

Referring now to Figure 6, a flowchart is shown illustrating a method for integrating intelligent cruise control functions with traditional cruise control functions in an electronically controlled internal-combustion engine according to the present invention. The distance between the host vehicle and a forward vehicle is sensed as represented by block 180. Preferably, an EVT-200 Collision Warning System provides this function. The closure rate is determined at block 182. This information may be determined within a sensor or may be determined by the vehicle ECM or TCM. Block 184 determines a desired engine parameter value.

In one embodiment, block 184 determines a desired engine speed value based on the distance signal. Closure rate information and current operating conditions may also influence the desired engine speed value. In another embodiment, the desired parameter value is an engine speed/torque limit value as explained above. At step 186, a request is broadcast to the ECM via a standard communications interface to enter the appropriate control mode while the desired parameter value is broadcast at step 188. The broadcast may originate from the distance sensor or from the TCM. In one embodiment, step 186 requests engine speed control mode and step 188 broadcasts a desired engine speed value. In another embodiment, step 186 requests engine speed/torque limit control mode and step 188 broadcasts an engine speed limit value and torque limit value. In a preferred embodiment, the torque limit value represents the maximum available torque (100%). One or more of the method steps illustrated may be periodically repeated at differing time intervals depending upon the particular application. Preferably, distance information is continually provided by a sensor which may result in the same or a different value for the desired parameter. While in engine speed control mode, the desired parameter value is repeatedly broadcast by step 186 whether or not there is any significant change. While in engine speed/torque limit control mode, the desired parameter value is broadcast only when a change in the desired value is indicated.

Referring now to Figure 7, a flowchart is shown illustrating another embodiment of a method for integrating intelligent cruise control functions with traditional cruise control functions in an electronically controlled internal-combustion engine according to the present invention. Steps 190, 192, and 194 function in a manner similar to steps 180, 182, and 184 illustrated in Figure 6 and described in detail above. At step 196, the method determines the traditional cruise control set point. Step 198 then selects the lesser of the desired parameter value and the traditional cruise set point. The lesser value may then be utilized to control the desired parameter in accordance with a predetermined control strategy such as described in the SAE J1939 and SAE J1922 specifications and illustrated in Figure 2.

Figure 8 illustrates another embodiment of a system and method according to the present invention. The components having primed reference numerals correspond in structure and function to similar components as illustrated and described with reference to Figure 1. However, the embodiment of Figure 8 includes cruise control logic within a collision warning system 58', such as the EVT-200 manufactured by Eaton VORAD Technologies, rather than within the ECM or the TCM. Thus, in this embodiment, distance and closing rate information is directly available to the control logic without being broadcast over a communication link. The control logic within the collision warning system then communicates the appropriate control commands to the ECM and/or TCM utilizing SAE J1922 or SAE J1939 as described above. Of course, the control logic may also be in direct communication with an engine retarder, or may communicate via the ECM as illustrated.

It is understood, of course, that while the forms of the invention herein shown and described include the best mode contemplated for carrying out the present invention, they are not intended to illustrate all possible forms thereof. It will also be understood that the words used are descriptive rather than limiting, and that various changes may be made without departing from the spirit or scope of the invention as claimed below.

## Claims

1. A system for integrating cruise control functions (70, 72) based on distance between at least one forward object and a vehicle (10) having an engine (E) controlled by an electronic control module (40) having a plurality of engine control modes selectable via a communications interface for exchanging control and status information, the electronic control module (40) also including logic rules to implement cruise control (70) based on a selectable set point, the system comprising:
a sensor (58) for determining distance between the vehicle and at least one forward object; and
control logic (72) in communication with the sensor (58) and in communication with the electronic control module (40) for determining a desired vehicle parameter value based on the determined distance, selecting one of the plurality of engine control modes via the communications interface, and communicating the desired vehicle parameter value to the electronic control module (40) via the communications interface.

2. The system of claim 1 wherein the control logic (72) is further operative to determine a closure rate based on the determined distance and wherein the desired vehicle parameter value is also based on the closure rate.

3. The system of claim 1 wherein the plurality of engine control modes includes an engine speed control mode and wherein the control logic (72) selects the engine speed control mode.

4. The system of claim 3 wherein the desired vehicle parameter is engine speed and wherein the control logic (72) communicates a desired engine speed value to the electronic control module.

5. The system of claim 1 wherein the plurality of engine control modes includes an engine speed limit control mode and wherein the control logic (72) selects the engine speed limit control mode.

6. The system of claim 5 wherein the control logic (72) communicates an engine speed upper limit value to the electronic control module (40).

7. The system of claim 5 wherein the control logic (72) communicates an engine speed upper limit value to the electronic control module (40) only when the determined distance is less than a selectable desired following distance.

8. The system of claim 1 wherein the control logic (72) selects one of the plurality of engine control modes only when the determined distance is less than a selectable desired following distance.

9. The system of claim 1 wherein the control logic (72) selects one of the plurality of engine control modes utilizing the SAE J1922 communications standard.

10. The system of claim 1 wherein the control logic selects one of the plurality of engine control modes utilizing the SAE J1939 communications standard.

11. The system of claim 1 wherein the engine (E) includes an engine retarder and wherein the control logic (72) is further operative to actuate the engine retarder when the determined distance is less than a selectable desired distance.

12. The system of claim 1 wherein the plurality of engine control modes includes an engine speed control mode, the desired vehicle parameter is engine speed, and wherein the control logic selects the engine speed control mode and repeatedly communicates a desired engine speed value to the electronic control module (40) independent of a change in the desired engine speed value.

13. The system of claim 1 wherein the plurality of engine control modes includes an engine speed and torque limit control mode, the desired vehicle parameter is engine speed, and wherein the control logic selects the engine speed and torque limit control mode and communicates an engine speed limit value to the electronic control module (40) when a change in the engine speed limit value is determined.

14. A system for implementing cruise control functions based on distance between at least one forward object and a vehicle (10) having an engine (E) controlled by an electronic control module (40) including logic rules (70) for determining a first vehicle cruise control parameter value based on a selectable cruise control set point, the system comprising:
a sensor (58) for determining distance between the vehicle and the at least one forward object;
first control logic (72) in communication with the sensor (58) and in communication with the electronic control module (40) for determining a second desired vehicle parameter value based on the determined distance; and
second control logic (70) disposed within the electronic control module (40) and in communication with the first control logic (72) for selecting the smaller of the first and second desired vehicle parameter values so as to determine a selected parameter value and for controlling the engine (E) based on the selected parameter value.

15. The system of claim 14 wherein the vehicle parameter comprises vehicle road speed.

16. The system of claim 14 wherein the second desired vehicle parameter value is also based on a time rate of change of the determined distance.

17. The system of claim 14 wherein the electronic control module (40) includes a plurality of engine control modes in compliance with SAE J1939.

18. The system of claim 14 wherein the electronic control module (40) effects a control strategy in accordance with SAE J1939.

19. A method for integrating cruise control functions (70, 72) based on distance between at least one forward object and a vehicle (10) having an engine (E) controlled by an electronic control module (40) having a plurality of selectable engine control modes and logic rules (70) for implementing cruise control based on a selectable set point, the vehicle (10) also including a sensor (58) for determining distance between the vehicle (10) and the at least one forward object so as to define an inter-object distance and control logic (72) in communication with the sensor (58) and the electronic control module (40) via a communications interface, the method comprising:
determining (180, 190) the inter-object distance utilizing the sensor;
determining a desired vehicle parameter value based on the inter-object distance;
selecting one of the plurality of engine control modes via the communications interface; and
communicating (188) the desired vehicle parameter value to the electronic control module (40) via the communications interface.

20. The method of claim 19 further comprising controlling the engine based on the desired vehicle parameter value.

21. The method of claim 20 wherein the engine (E) further includes an engine retarder in communication with the electronic control module (40) and wherein the step of controlling the engine comprises controlling the engine retarder.

22. The method of claim 19 wherein the desired vehicle parameter value is determined based on a time rate of change of the inter-object distance.

23. The method of claim 19 wherein the steps of selecting and communicating comprise communicating at least one message in compliance with SAE J1922.

24. The method of claim 19 wherein the steps of selecting and communicating comprise communicating at least one message in compliance with SAE J1939.

25. The method of claim 19 wherein the plurality of engine control modes includes an engine speed control mode and wherein the step of selecting comprises selecting the engine speed control mode.

26. The method of claim 19 wherein the plurality of engine control modes includes an engine speed and torque limit control mode and wherein the step of selecting comprises selecting the engine speed and torque limit control mode.

27. The method of claim 19 wherein the step of communicating comprises repeatedly communicating the desired vehicle parameter value independent of the desired vehicle parameter value.

28. A method for integrating cruise control functions (70, 72) based on inter-vehicle distance in a vehicle (10) having an engine (E) controlled by an electronic control module (40) having a plurality of selectable engine control modes and logic rules (70) for determining a first desired vehicle parameter value to implement cruise control based on a selectable set point, the vehicle also including a sensor (58) for determining distance between the vehicle (10) and a forward vehicle so as to define an inter-vehicle distance, and control logic (72) in communication with the sensor (58) and the electronic control module (40) via a communications interface for exchanging control and status information, the method comprising:
sensing (190) the inter-vehicle distance utilizing the sensor;
determining (194) a second desired vehicle parameter value based on the inter-vehicle distance;
selecting the smaller (198) of the first and second desired vehicle parameter values so as to determine a selected parameter value; and
controlling the engine based on the selected parameter value.

29. The method of claim 28 wherein the step of determining comprises determining a time rate of change of the inter-vehicle distance.

30. The method of claim 28 wherein the step of controlling the engine comprises controlling the engine in accordance with SAE J1939.

31. The method of claim 28 wherein the first and second desired vehicle parameters comprise vehicle road speed.
